# EUROPEAN PATENT SPECIFICATION

(11) **EP 3 392 160 B1**
(45) Date of publication and mention of the grant of the patent: **22.07.2020**
(21) Application number: 16875324.2
(22) Date of filing: 16.11.2016
(51) Int. Cl.: B65D 33/00

(54) **PACKAGING BODY**
VERPACKUNGSKÖRPER
CORPS D'EMBALLAGE

(30) Priority: 15.12.2015 JP 2015243989; 21.12.2015 JP 2015248281
(43) Date of publication of application: 24.10.2018
(73) Proprietor: Toyo Seikan Co., Ltd., Tokyo 141-8640 (JP)
(72) Inventor: YASUUMI, Takahiro, Yokohama-shi Kanagawa 230-0001 (JP); YAMAGUCHI, Madoka, Yokohama-shi Kanagawa 230-0001 (JP); HATANO, Yasushi, Yokohama-shi Kanagawa 230-0001 (JP); KURIYAMA, Kouji, Yokohama-shi Kanagawa 230-0001 (JP)
(74) Representative: J A Kemp LLP
(86) International application number: PCT/JP2016/083968
(87) International publication number: WO 2017/104340

(56) References cited:
- EP-A1- 0 541 821
- EP-A1- 2 565 131
- EP-A1- 2 565 131
- JP-A- 2003 267 404
- JP-A- 2010 173 689
- JP-A- 2010 186 189

## Description

### Technical Field:

The present invention relates to a package that is provided with a pattern, a letter, a mark or the like formed of a three-dimensionally shaped portion. More specifically, the present invention relates to a package that is provided with a pattern, a letter, a mark or the like emphasizing its stereoscopic effect to impart excellent design and practicality required for a package.

### Background Art:

Examples of the package include a bag-like container such as a pouch to be filled with a semi-fluid or fluid content like food, beverage and a detergent, and a sealing member used as a lid for a cup-like or tray-like container. There has been a requirement that the package be provided with a letter(s) indicating the product name and also various patterns in order to differentiate the product from others and to increase the commodity value. To satisfy the requirement, printed letters and patterns may be formed three-dimensionally to stand out. Further, in the bag-like container such as a pouch, a protruding part serving as a spout may be formed three-dimensionally.

For instance, Patent Document 1 below proposes an embossed bag-like container formed of a soft packaging material to be filled with contents and tightly sealed. An upper parts having a convex portion formed according to a desired embossed pattern is heated and at least the convex portion thereof is heated to a predetermined temperature. Later, on at least one side of this bag-like container, the convex portion is brought into contact with the surface of the soft packaging material so as to shrink partly the soft packaging material and swell outwardly, so that an embossed bag-like container having a predetermined shape of a first embossed pattern is formed.

Patent Document 2 below proposes a method for working a laminated film. In the method, a mold of a letter or a mark is heated and pressed on a laminated film including a plurality of resin films different from each other in the thermal expansion coefficients, so that a part of the laminated film is heated to have a shape of the mold, and then, the mold is separated from the laminated film to stop heating the laminated film. As a result, the expanded shape of the mold is imparted to the resin film having smaller thermal expansion coefficient.

Further, Patent Document 3 proposes a method of three-dimensionally molding a laminated film. In the method, a laminated film, which has a laminate of at least a soft innermost resin film and an outer resin film with high strength, is compress-shaped in the thickness direction in a cold working so that the compress-shaped portion protrudes outward.

Patent Document 4 describes a self-standing bag composed of: (i) a trunk part comprising multi-layer plastic films having an inner heat-bonding plastic layer; and (ii) a bottom part in which linear ribs, each having a cross-sectional shape in which projections and recesses alternate, are provided on the inner or outer layer of the multi-layer plastic films. The linear rib is formed in such a manner that a stamper having a linear projection at the tip thereof is pressed to the multi-layer plastic film to thin the pressed part of the film to be turned into a linear groove and a raised part is fixedly formed on the upper end of the groove.

### Prior Art Documents:

### Patent Documents:

Patent Document 1: JP 4370768
Patent Document 2: JP 5150433
Patent Document 3: JP-A-2014-46655
Patent Document 4: EP 0 541 821 A1

### Summary of the Invention:

### Problems to be solved by the invention:

However, when an excessive compression shaping is performed during the compression shaping or pressing as mentioned in the above Patent Documents 1-3, thickness of the inner film (sealant film) is decreased at the outward expanded part (protrusion) of the laminated film after pressing, and this may cause partial rupture or peeling. Even if such rupture or peeling does not occur, the design may deteriorate. For instance, the contour of the compress-shaped part and the surface condition may be poorly defined or may be unclear. Further, the basic functions for the package, such as a gas barrier property, a vapor barrier property, a drop impact resistance, and a piercing resistance may deteriorate, depending on the working degree during the compression shaping. On the other hand, when the sealant film of the aforementioned laminated film after pressing is thick at the part expanding outward, the shaping height may be insufficient so that the protrusion cannot be well defined. This may cause inferior ornamental effect and degrade the design.

Therefore, an object of the present invention is to prepare a package by pressing or compress-shaping a resin film to provide the film with a pattern, a letter, a mark or the like formed of a three-dimensionally shaped portion that protrudes outward. In the package, rupture or peeling is prevented at the three-dimensionally shaped portion and the aforementioned basic functions for package are kept. Further, the three-dimensionally shaped portion is well defined and excellent in ornamental effect, and its design is also improved. Means for solving the problems:

The present invention provides a package formed of a resin film having a three-dimensionally shaped portion that protrudes outward. The thinnest part thickness of the sealant film at the three-dimensionally shaped portion that protrudes outward is 50 to 95% of the thickness of the sealant film at a part other than the three-dimensionally shaped portion.

It is preferable in the package of the present invention that:
a) the resin film is a laminated film comprising an elastic sealant film and a less elastic outer film;
b) the sealant film is a linear low density polyethylene film;
c) the outer film of the laminated film is a stretched nylon film;
d) the laminated film has an intermediate layer comprising a stretched polyethylene terephthalate film;
e) the laminated film has an intermediate layer comprising an aluminum vapor deposition stretched polyethylene terephthalate film; and
f) the laminated film has an intermediate layer comprising a metal foil.

### Effects of the invention:

The package of the present invention includes a resin film on which a pattern, a letter, a mark or the like is formed as a three-dimensionally shaped portion that protrudes outward. Thickness of the thinnest part of the sealant film at the three-dimensionally shaped portion of the package is 50 to 95% or particularly 60 to 90% of the thickness of the sealant film at a part other than the three-dimensionally shaped portion, whereby rupture or peeling of the resin film at the three-dimensionally shaped portion can be prevented.

Further, the present invention makes it possible to form a well-defined three-dimensionally shaped portion, and provide a package that keeps the basic functions required for a package, such as a gas barrier property, a vapor barrier property, a drop impact resistance and a piercing resistance. The package has also an excellent ornamental effect and an excellent design.

### Brief Description of the Drawings:

[Fig. 1] : a view showing an embodiment of a package of the present invention;
[Fig. 2] : an enlarged view taken along the line A-A on the cross section in Fig. 1;
[Fig. 3] : a reference view of a package as a standing pouch on which a latticed three-dimensionally shaped portion is formed; and
[Fig. 4] : a graph indicating a relationship between a working degree at three-dimensionally shaped portion and moisture reduction amount.

### Mode for Carrying Out the Invention:

The package of the present invention may include a resin film as a single layer film of a sealant film or as a laminated film of the sealant film and any other film. Preferably, a laminated film prepared by laminating an elastic sealant film and a less elastic outer film can be used. Hereinafter, embodiments each using such a laminated film will be described.

Further in the package of the present invention, the three-dimensionally shaped portion is formed by pressing or compression shaping to protrude outward. The three-dimensionally shaped portion can be employed as a pattern, a letter, a mark or the like in the package used as a bag-like container like a pouch or a sealing material used as a lid for a cup-like or tray-like container, and furthermore, as a communication passage to communicate with a spout of the pouch.

### (Laminated film)

The laminated film used in the package of the present invention comprises a laminate structure of at least two types of films different from each other in the elasticity, where a sealant film (inner film) is an elastic film while an outer film is a less elastic film. That is, the laminated film preferably has a laminate structure of at least two types of films different from each other in the elastic moduli. For instance, the elastic (low elastic modulus) sealant film is preferably a sealant film of a resin such as polyethylene or polypropylene. For the polyethylene, a linear low density polyethylene (LLDPE) is preferred in particular. The linear low density polyethylene film may suitably contain a resin such as low density polyethylene and ethylene-α-olefin copolymer.

For the less elastic (high elastic modulus) outer film, a stretched film of nylon, polyethylene terephthalate (PET) or the like may be used preferably.

For the intermediate layer, a vapor deposition film such as an aluminum vapor deposition PET film and an aluminum vapor deposition nylon film, or a metal foil such as an aluminum foil can be provided. By providing the intermediate layer of an aluminum vapor deposition film or a metal foil such as an aluminum foil, the metallic luster provides a synergic effect to further improve the ornamental effect provided by the aforementioned three-dimensionally shaped portion.

Specific examples of the layer structure of a laminated film are described below each in an order of inner face / outer face:
LLDPE film / stretched nylon film;
LLDPE film / stretched PET film;
LLDPE film / stretched nylon film / stretched PET film;
LLDPE film / stretched PET film / stretched nylon film;
LLDPE film / stretched PET film / stretched PET film;
LLDPE film / aluminum vapor deposition stretched PET film / stretched nylon film;
LLDPE film / aluminum vapor deposition stretched nylon film / stretched PET film;
LLDPE film / aluminum vapor deposition stretched PET film / stretched PET film;
LLDPE film / aluminum foil / stretched nylon film;
LLDPE film / stretched nylon film / aluminum foil / stretched PET film;
polypropylene film / stretched nylon film;
polypropylene film / stretched PET film;
polypropylene film / stretched nylon film / stretched PET film;
polypropylene film / stretched PET film / stretched nylon film;
polypropylene film / stretched PET film / stretched PET film;
polypropylene film / aluminum vapor deposition stretched PET film / stretched nylon film;
polypropylene film / aluminum vapor deposition stretched nylon film / stretched PET film; and
polypropylene film / aluminum vapor deposition stretched PET film / stretched PET film.

A particularly preferred laminated film may have a layer structure having an intermediate layer formed of an aluminum vapor deposition stretched PET film or a metal foil such as an aluminum foil, from the viewpoint of optimizing the ornamental effect imparted by the letter, the pattern or the like formed of the three-dimensionally shaped portion that protrudes outward.

On the outer side of the outer film of the laminated film, any other layer may be provided as long as the effect of the present invention is not inhibited.

Though the thicknesses of the sealant film and the outer film of the laminated film are not limited in particular, it is preferable that the thickness of the sealant film is in a range of 50 to 200 µm, the thickness of the outer film is in a range of 10 to 30 µm, and the thickness of the sealant film is 3 to 20 times the thickness of the outer film, from the viewpoint of compress-shaping the laminated film and forming the three-dimensionally shaped portion that protrudes outward.

In a case of further providing an additional layer to the laminated film, the total thickness of the laminated film is preferably in a range of 70 to 300 µm.

### (Package)

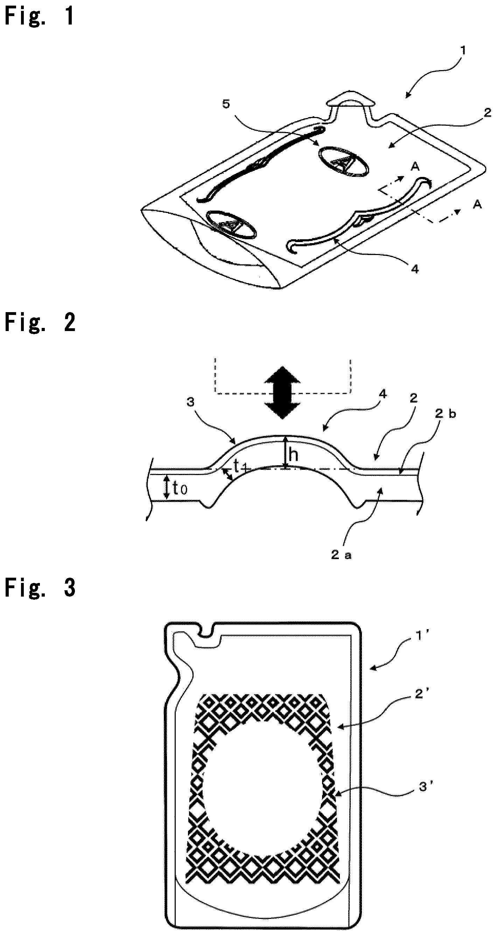

Fig. 1 shows a bag-like container (pouch) as an embodiment of package of the present invention. As shown in Fig. 1, a pattern 4 and a sign 5 of embossed three-dimensionally shaped portions 3 are formed to protrude outward on at least one surface of a pouch 1 made of a laminated film 2.

Here, the pattern 4 and the sign 5 of the embossed three-dimensionally shaped portion 3 on the surface of the pouch 1 are provided by compression shaping. The working degrees therefor are determined in a certain manner. For instance, the working degree at the pattern 4 on the laminated film 2 as shown in Fig. 2 is determined as follows. That is, a thinnest part thickness t1 of a sealant film 2a at the three-dimensionally shaped portion 3 is set to be 50 to 95%, particularly preferably 60 to 90% of a thickness t0 of the sealant film 2a at a part other than the three-dimensionally shaped portion 3 (i.e., unworked part).

When the thinnest part thickness t1 of the sealant film 2a at the three-dimensionally shaped portion 3 is less than 50% of the thickness t0 of the sealant film 2a at a part other than the three-dimensionally shaped portion 3, the contour and the surface condition of the three-dimensionally shaped portion 3 may be poorly defined or unclear and its design may deteriorate. Further, it may cause rupture or peeling at the three-dimensionally shaped portion 3. In addition to that, the basic functions for the package, such as a gas barrier property, a vapor barrier property, a drop impact resistance and a piercing resistance may deteriorate although the influence may vary depending on the working degree at the three-dimensionally shaped portion 3.

When the thinnest part thickness t1 of the sealant film 2a at the three-dimensionally shaped portion 3 is more than 95% of the thickness t0 of the sealant film 2a at a part other than the three-dimensionally shaped portion 3, the shaping height of the pattern 4 at the three-dimensionally shaped portion 3 may be insufficient. As a result, the pattern 4 may be poorly defined, the ornamental effect may be inferior, and the design may deteriorate.

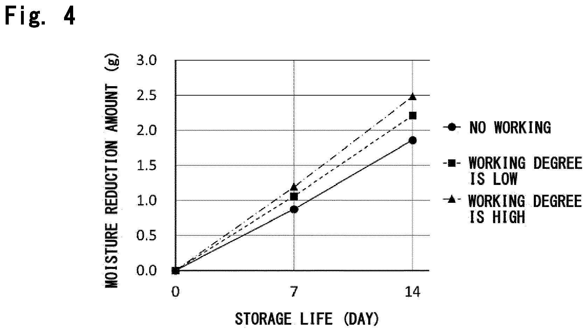

For instance, in a case where a lattice-like three-dimensionally shaped portion 3' indicated with black lines is provided on a standing pouch 1' shown in Fig. 3, as shown in the graph of Fig. 4, the moisture may be further reduced and the vapor barrier property may deteriorate when the working degree at the three-dimensionally shaped portion 3' is increased, namely, when the protrusion (shaping height h) is increased. The working degree of the standing pouch 1' varies depending on its sites. For instance, it is determined in the present invention that the thinnest part thickness t1 of the sealant film 2a constituting the laminated film 2' is 50 to 95%, particularly 60 to 90% of the thickness t0 of the sealant film 2a at a part other than the three-dimensionally shaped portion 3' (i.e., unworked part), thereby preventing or controlling the deterioration in the vapor barrier property within a range for a practical use so as to provide a pouch having its basic functions.

The thinnest part of the sealant film 2a at the three-dimensionally shaped portion 3, which is indicated as t1 in Fig. 2, is formed by compression shaping at the periphery or in vicinity of the periphery of the three-dimensionally shaped portion 3 viewed from the outer film 2b side.

The suitable height h of the aforementioned three-dimensionally shaped portion 3 that protrudes outward is preferably 0.1 mm or more, and in particular 0.15 mm or more. When the height is less than 0.1 mm, the three-dimensionally shaped portion 3 of the pattern, the letter, the mark or the like may be poorly defined. As a result, the ornamental effect becomes inferior and the design cannot be improved. The upper limit can be determined by taking the following factors into consideration: the design of the aforementioned three-dimensionally shaped portion 3, prevention of rupture and peeling, and basic functions required for a package, such as the gas barrier property, the vapor barrier property, the drop impact resistance and the piercing resistance.

Sizes of the principal parts of the three-dimensionally shaped portion 3 are as follows. When the three-dimensionally shaped portion 3 on the laminated film constituting the pouch is formed by using a below-mentioned rotary roll working device, the width (in the direction of shaping roll width) is 1 to 100 mm, preferably 5 to 50 mm. The maximum length (in the direction of shaping roll rotation) is equal to the width of the pouch, excepting the sealing width. Namely, the sizes (i.e., width and length) of the principal parts of the three-dimensionally shaped portion 3 may be determined by accounting for some factors such as prevention or control of wrinkles, some restrictions (e.g., warping of the shaping roll) relating to the working equipment, and furthermore the aforementioned design and also its basic functions required for a package.

### (Compression shaping)

The three-dimensionally shaped portion 3 of the package of the present invention, which protrudes outward, can be formed by compression-shaping the laminated film 2 at a temperature within a range from the temperature for a warm working to the temperature for a cold working (normal temperature) . Here, the warm working indicates a working where the laminated film 2 is heated to a softening point that is lower than the melting point of the sealant film 2a.

Specifically, if the laminated film 2 was compress-shaped in a hot working of heating to approximate to the melting point of the sealant film 2a, the sealant film 2a might get damaged. Moreover, during the compression shaping, the thickness t1 of the sealant film 2a at the three-dimensionally shaped portion 3 that protrudes outward might be decreased. This might degrade the design of the aforementioned three-dimensionally shaped portion 3, might cause rupture and peeling, and might impair the basic functions required for a package, such as the gas barrier property, the vapor barrier property, the drop impact resistance and the piercing resistance. It is preferable, therefore, the compression shaping is conducted at temperature within a range from the softening temperature of the sealant film 2a (warm working) to normal temperature (cold working).

Then, at the time of compress-shaping the laminated film 2 so as to form the three-dimensionally shaped portion 3 that protrudes outward, the laminated film 2 is suitably heated to a temperature range from the softening temperature lower than the melting point of the sealant film 2a to a temperature higher than the normal temperature, and then subjected to compression shaping. This working is preferred from the viewpoint of improving the shaping property (i.e., the height h of the three-dimensionally shaped portion 3). For instance, when the sealant film 2a is a linear low density polyethylene film, the laminated film may preferably be heated to a range of 40 to 60°C and then subjected to a warm working.

In the present specification, "normal temperature" indicates that neither heating nor cooling is conducted, and it is synonymous with "room temperature".

Though the mechanism of protrusion that occurs due to the compression shaping has not been clarified completely, the inventors speculate it as follows. That is, when a laminated film formed of an elastic sealant film and a less elastic outer film is compressed in the thickness direction, compression deformation thereof may occur at only the more stretchable elastic sealant film so as to stretch the sealant film to be pushed out from the compressed region. At that time, the less elastic outer film may be stretched in accordance with the deformation of the sealant film. Later, the compression force is relieved and the sealant film and the outer film recover their thickness. At that time, since the sealant film recovers greatly while the outer film recovers only slightly, the outer film retains the stretch imparted by the deformation of the sealant film.

### (Shaping apparatus)

With regard to the package of the present invention, a shaping apparatus for forming the three-dimensionally shaped portion that protrudes outward is constituted of a rotary roll working device or the like comprising a shaping roll equipped with a working mold and an anvil roll, though the shaping apparatus is not limited to this example. The rotary roll working device may be employed for compression shaping in a cold working. Alternatively, the shaping apparatus may be constituted of a conventionally known heating unit and a rotary roll working device or the like comprising a shaping roll equipped with a working mold and an anvil roll. In this case, the laminated film is suitably heated with the heating unit to a temperature range from the softening point lower than the melting point of the sealant film of the laminated film to a temperature higher than the normal temperature. After the heating, compression shaping is conducted in a warm working by use of the rotary roll working device at normal temperature.

Since the laminated film is compress-shaped with the rotary roll working device in this manner, the compress-shaped portion protrudes outward when the pressure is relieved after the compress-shaping.

At that time, the distance (clearance) between the shaping roll and the anvil roll is suitably set in accordance with the layer constitution and thickness of the laminated film in use or the temperature of the laminated film for instance, whereby the protrusion (height h) of the three-dimensionally shaped portion and the thinnest part thickness of the sealant film can be adjusted.

Alternatively, the compression shaping in the cold working of the laminated film can be conducted by using a conventionally known press-working device.

### Examples:

### (Conditions)

### 1. Laminated film

The components viewed from inside to outside are as follows: linear low density polyethylene film (120 µm) / urethane-based adhesive (4 µm) / aluminum vapor deposition stretched PET film (12 µm) / urethane-based adhesive (4 µm) / stretched nylon film (15 µm).

The total thickness of the laminated film is 155 µm.

### 2. Rotary roll working device

Diameter of the shaping roll and the anvil roll is 130 mm, and the rotation number is 60 rpm.

### 3. Compress-shaped size

Width (shaping roll width direction) is 50 mm, and length (shaping roll rotational direction) is 3 mm.

### 4. Measurement

### (1) Thinnest part thickness t1 of sealant film at three-dimensionally shaped portion

The thinnest part thickness t1 of the sealant film on the cross-section in the width direction at the three-dimensionally shaped portion formed on the laminated film to protrude outward is measured through microscopic observation on the cross section cut out with a microtome.

### (2) Shaping height h of three-dimensionally shaped portion

The shaping height h on the cross section in the width direction (shaping roll width direction) of the three-dimensionally shaped portion formed on the laminated film to protrude outward is measured with a surface profiler.

### [Example 1]

A laminated film was subjected to a compression-shaping in a cold working (normal temperature) by use of a rotary roll working device provided with a shaping roll having a working mold and an anvil roll. In the working, a clearance between the working mold and the anvil roll was set to 0.105 mm, thereby measuring a thinnest part thickness t1 of the sealant film at the three-dimensionally shaped portion and the shaping height h of the three-dimensionally shaped portion.

Then, the ratio (%) of the thinnest part thickness t1 of the sealant film at the three-dimensionally shaped portion to the unworked part thickness t0 of the sealant film in the vicinity of the three-dimensionally shaped portion was calculated, and the three-dimensionally shaped portion was observed visually to check rupture and peeling, and its design (definition of three-dimensionally shaped portion and ornamental effect).

### [Example 2]

Compression shaping was conducted in the same manner as Example 1 except that the clearance between the working mold of the shaping roll and the anvil roll of the rotary roll working device was set to 0.100 mm. After the respective measurements, the ratio (%) of the thinnest part thickness t1 of the sealant film to the unworked part thickness t0 of the sealant film was calculated, and a visual check was conducted.

### [Example 3]

Compression shaping was conducted in the same manner as Example 1 except that the clearance between the working mold of the shaping roll and the anvil roll of the rotary roll working device was set to 0.070 mm. After the respective measurements, the ratio (%) of the thinnest part thickness t1 of the sealant film to the unworked part thickness t0 of the sealant film was calculated, and a visual check was conducted.

### [Example 4]

Compression shaping was conducted in the same manner as Example 1 except that the clearance between the working mold of the shaping roll and the anvil roll of the rotary roll working device was set to 0.040 mm. After the respective measurements, the ratio (%) of the thinnest part thickness t1 of the sealant film to the unworked part thickness t0 of the sealant film was calculated, and a visual check was conducted.

### [Comparative Example 1]

Compression shaping was conducted in the same manner as Example 1 except that the clearance between the working mold of the shaping roll and the anvil roll of the rotary roll working device was set to 0.110 mm. After the respective measurements, the ratio (%) of the thinnest part thickness t1 of the sealant film to the unworked part thickness t0 of the sealant film was calculated, and a visual check was conducted.

### [Comparative Example 2]

Compression shaping was conducted in the same manner as Example 1 except that the clearance between the working mold of the shaping roll and the anvil roll of the rotary roll working device was set to 0.020 mm. After the respective measurements, the ratio (%) of the thinnest part thickness t1 of the sealant film to the unworked part thickness t0 of the sealant film was calculated, and a visual check was conducted.

### [Comparative Example 3]

Compression shaping was conducted in the same manner as Example 1 except that the clearance between the working mold of the shaping roll and the anvil roll of the rotary roll working device was set to 0.015 mm. After the respective measurements, the ratio (%) of the thinnest part thickness t1 of the sealant film to the unworked part thickness t0 of the sealant film was calculated, and a visual check was conducted.

### [Example 5]

Compression shaping was conducted in the same manner as Example 1 except that the laminated film was heated to 60°C (film temperature) and that the clearance between the working mold of the shaping roll and the anvil roll of the rotary roll working device was set to 0.130 mm. After the respective measurements, the ratio (%) of the thinnest part thickness t1 of the sealant film to the unworked part thickness t0 of the sealant film was calculated, and a visual check was conducted.

### [Example 6]

Compression shaping was conducted in the same manner as Example 5 except that the clearance between the working mold of the shaping roll and the anvil roll of the rotary roll working device was set to 0.085 mm. After the respective measurements, the ratio (%) of the thinnest part thickness t1 of the sealant film to the unworked part thickness t0 of the sealant film was calculated, and a visual check was conducted.

### [Comparative Example 4]

Compression shaping was conducted in the same manner as Example 5 except that the clearance between the working mold of the shaping roll and the anvil roll of the rotary roll working device was set to 0.080 mm. After the respective measurements, the ratio (%) of the thinnest part thickness t1 of the sealant film to the unworked part thickness t0 of the sealant film was calculated, and a visual check was conducted.

### [Comparative Example 5]

Compression shaping was conducted in the same manner as Example 5 except that the clearance between the working mold of the shaping roll and the anvil roll of the rotary roll working device was set to 0.150 mm. After the respective measurements, the ratio (%) of the thinnest part thickness t1 of the sealant film to the unworked part thickness t0 of the sealant film was calculated, and a visual check was conducted.

The respective results are shown in Table 1.

**[Table 1]**

| | Laminated film temperature | Clearance between rolls (mm) | t1/t0 (%) | Shaping height h (mm) | Rupture peeling | Design |
|---|---|---|---|---|---|---|
| Example 1 | Normal | 0.105 | 95 | 0.1 | No | ○ |
| Example 2 | Normal | 0.100 | 90 | 0.15 | No | ⊚ |
| Example 3 | Normal | 0.070 | 60 | 0.4 | No | ⊚ |
| Example 4 | Normal | 0.040 | 50 | 0.5 | No | ○ |
| Com. Ex. 1 | Normal | 0.110 | 98 | 0.07 | No | × |
| Com. Ex. 2 | Normal | 0.020 | 46 | 0.5 | No | × |
| Com. Ex. 3 | Normal | 0.015 | 30 | 0.55 | Peeling Yes | × |
| Example 5 | 60° C | 0.130 | 95 | 0.1 | No | ○ |
| Example 6 | 60° C | 0.085 | 50 | 0.3 | No | ○ |
| Com. Ex. 4 | 60° C | 0.080 | 45 | 0.3 | No | × |
| Com. Ex. 6 | 60° C | 0.150 | 97 | 0.05 | No | × |

| | | | | | | |
|---|---|---|---|---|---|---|
| *Com.Ex.: Comparative Example *Normal: Normal temperature | | | | | | |

### (Observation)

The pattern of the three-dimensionally shaped portion that protrudes outward from the pouch was observed. The observation results indicates that the definition of pattern, the ornamental effect and the design were improved without causing rupture or peeling at the three-dimensionally shaped portion by setting the thinnest part thickness t1 of the sealant film at the three-dimensionally shaped portion to 50 to 95% of the unworked part thickness t0 of the sealant film. Further, the three-dimensionally shaped portion had a proper height (shaping height h), namely, the thickness of the resin film at the pattern site was not decreased, thereby providing a pouch free from problems, i.e., degradation in its barrier property at the three-dimensionally shaped portion and peeling between films.

The present invention is described based on embodiments with reference to the attached drawings, but the present invention is not limited to these embodiments.

### Explanations of Letters or Numerals:

- 1: package (pouch)
- 2: laminated film
- 3: three-dimensionally shaped portion
- 4: pattern
- 5: sign

## Claims

1. A package formed of a resin film including a sealant film (2a) with a three-dimensionally shaped portion (3) that protrudes outward,
**characterized in that** the sealant film (2a) has a thinnest part at the three-dimensionally shaped portion (3) that protrudes outward with a thickness of 50 to 95% of a thickness of the sealant film (2a) at a part other than the three-dimensionally shaped portion (3).

2. The package according to claim 1, wherein the resin film is a laminated film (2) comprising an elastic sealant film (2a) and a less elastic outer film (2b).

3. The package according to claim 1 or 2, wherein the sealant film (2a) is a linear low density polyethylene film.

4. The package according to claim 2 or 3, wherein the outer film (2b) of the laminated film (2) is a stretched nylon film.

5. The package according to any one of claims 2 to 4, wherein the laminated film (2) has an intermediate layer comprising a stretched polyethylene terephthalate film.

6. The package according to any one of claims 2 to 4, wherein the laminated film (2) has an intermediate layer comprising an aluminum vapor deposition stretched polyethylene terephthalate film.

7. The package according to any one of claims 2 to 4, wherein the laminated film (2) has an intermediate layer comprising a metal foil.

## Patentansprüche

1. Verpackung, gebildet aus einer Harzfolie, umfassend eine Dichtmittelfolie (2a) mit einem dreidimensional geformten Abschnitt (3), der nach außen vorsteht,
**dadurch gekennzeichnet, dass** die Dichtmittelfolie (2a) einen dünnsten Teil an dem dreidimensional geformten Abschnitt (3) aufweist, der mit einer Dicke von 50 % bis 95 % einer Dicke der Dichtmittelfolie (2a) an einem anderen Teil als dem dreidimensional geformten Abschnitt (3) nach außen vorsteht.

2. Verpackung nach Anspruch 1, wobei die Harzfolie eine Verbundfolie (2), die eine elastische Dichtmittelfolie (2a) und eine weniger elastische äußere Folie (2b) umfasst, ist.

3. Verpackung nach Anspruch 1 oder 2, wobei die Dichtmittelfolie (2a) eine Folie aus linearem Polyethylen niedriger Dichte ist.

4. Verpackung nach Anspruch 2 oder 3, wobei die äußere Folie (2b) der Verbundfolie (2) eine Folie aus gedehntem Nylon ist.

5. Verpackung nach einem der Ansprüche 2 bis 4, wobei die Verbundfolie (2) eine Zwischenschicht, die eine Folie aus gedehntem Polyethylenterephthalat umfasst, aufweist.

6. Verpackung nach einem der Ansprüche 2 bis 4, wobei die Verbundfolie (2) eine Zwischenschicht, die eine Aluminiumgasphasenabscheidungsfolie aus gedehntem Polyethylenterephthalat umfasst, aufweist.

7. Verpackung nach einem der Ansprüche 2 bis 4, wobei die Verbundfolie (2) eine Mittelschicht, die eine Metallfolie umfasst, aufweist.

## Revendications

1. Emballage formé d'un film de résine comprenant un film d'étanchéité (2a) avec une partie en forme tridimensionnelle (3) qui fait saillie vers l'extérieur,
**caractérisé en ce que** le film d'étanchéité (2a) a une partie la plus mince au niveau de la partie en forme tridimensionnelle (3) qui fait saillie vers l'extérieur avec une épaisseur de 50 à 95% d'une épaisseur du film d'étanchéité (2a) à une partie autre que la partie tridimensionnelle (3).

2. Emballage selon la revendication 1, dans lequel le film de résine est un film stratifié (2) comprenant un film d'étanchéité élastique (2a) et un film externe moins élastique (2b).

3. Emballage selon la revendication 1 ou 2, dans lequel le film d'étanchéité (2a) est un film de polyéthylène à basse densité linéaire.

4. Emballage selon la revendication 2 ou 3, dans lequel le film extérieur (2b) du film stratifié (2) est un film de nylon étiré.

5. Emballage selon l'une quelconque des revendications 2 à 4, dans lequel le film stratifié (2) a une couche intermédiaire comprenant un film de polyéthylène téréphtalate étiré.

6. Emballage selon l'une quelconque des revendications 2 à 4, dans lequel le film stratifié (2) a une couche intermédiaire comprenant un film de polyéthylène téréphtalate étiré en phase vapeur.

7. Emballage selon l'une quelconque des revendications 2 à 4, dans lequel le film stratifié (2) a une couche intermédiaire comprenant une feuille métallique.
